# EUROPEAN PATENT SPECIFICATION

(11) **EP 2 728 945 B1**
(45) Date of publication and mention of the grant of the patent: **02.03.2022**
(21) Application number: 14152923.0
(22) Date of filing: 25.12.2008
(51) Int. Cl.: H04W 52/24, H04W 52/34, H04W 52/42

(54) **METHOD AND DEVICE FOR SHARING MULTI-CARRIER POWER**
VERFAHREN UND VORRICHTUNG ZUR DURCHFÜHRUNG EINER MEHRTRÄGER-LEISTUNGSVERTEILUNG
PROCÉDÉ ET DISPOSITIF PERMETTANT LA MISE EN OEUVRE D'UNE PARTIE D'UNE PUISSANCE MULTIPORTEUSE

(30) Priority: 27.12.2007 CN 200710198665; 21.03.2008 CN 200810084417
(43) Date of publication of application: 07.05.2014
(62) Divisional of application: 08870853.2
(73) Proprietor: Huawei Technologies Co., Ltd., Longgang District Shenzhen, Guangdong 518129 (CN)
(72) Inventor: Tang, Haizheng, 518129 Shenzhen (CN)
(74) Representative: Epping - Hermann - Fischer

(56) References cited:
- EP-A1- 1 530 387
- EP-A1- 1 798 884
- EP-A2- 1 455 465
- FR-A1- 2 897 734
- US-A1- 2001 006 888
- US-A1- 2002 094 833
- US-A1- 2004 248 606
- US-A1- 2006 154 684

## Description

### Field of the Invention

The present invention relates to communications technologies, and in particular, to a method and device for sharing multi-carrier power.

### Background of the Invention

With over 20 years' development of the Global System for Mobile communications (GSM), there are now a huge number of devices operating on the GSM network and the network size is increasing continuously at a high speed. Large-capacity sites are accounting for a larger and larger proportion but the prior devices are mainly single-carrier transceivers. To support large-capacity sites, multiple combinations are required, which results in great loss and low efficiency. With the development of wireless technologies, multi-carrier technologies are widely used in Wideband Code Division Multiple Access (WCDMA) and Code Division Multiple Access (CDMA) systems. The application of multi-carrier technologies to GSM networks is also promoted. With the increase of GSM carriers, however, the peak-to-average ratio of signals is higher and higher. If the Power Amplifier (PA) is not updated, the output power per carrier will also fall and the coverage will be smaller.

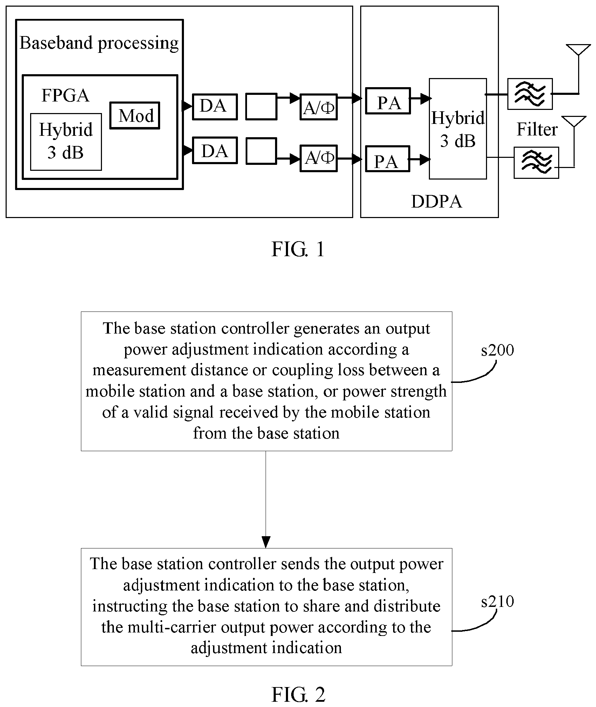

GSM dual-transceiver base stations with single-carrier techniques are used on a large scale on networks, and the Power Booster Technology (PBT) is widely used to increase coverage. As shown in FIG. 1, there are two independent radio transmission channels, which work independently when they are not combined, outputting two carrier signals respectively. When it is necessary to increase the output power so as to increase coverage, the two transmit powers are combined. In this way, the output power is increased with compromising the system capacity.

EP1798884A1 discloses a base station apparatus transmitting radio signals using a multicarrier modulation system includes a time manager for obtaining time information to manage it; a transmission power setting section for setting to some subcarriers among all subcarriers a first transmission power which enables the radio signals to reach all areas within a cell; a transmitter for transmitting the radio signals using the subcarriers to which the first transmission power is allocated; and the transmission power setting section changes at a certain time interval, subcarriers to which the first transmission power is set based on the obtained time information.

FR2897734A1 discloses a transmission method including distributing into subgroups a set of carriers among N carriers based on a predetermined criterion; and determining a set of power levels emitted per subgroup to achieve a minimum overall error criterion (BER). The sum of power levels of one set is equal to the product of the number Ntg of subgroup carriers and the average total power emitted on the N carriers.

EP1455465A2 discloses a mobile communications system including a plurality of base stations, and a radio controller controlling each base station is disclosed. The radio controller sets for each base station an offset value based on the communications quality at that base station so as to set a target transmission power value of a downlink from the base station to a mobile station, enabling an appropriate controlling of the transmission power of the downlink using a power-balancing control.

US2004/248606A1 discloses a transmission power control method, wherein a base station apparatus determines whether or not a communication terminal apparatus receiving an HSDPA service is in a hand over state, and controls a transmission power of an HS-SCCH with respect to the communication terminal apparatus based on a CQI signal when said communication terminal apparatus is in the hand over state. The method can provide a n HSDPA service in which the system throughput is improved.

US2002/094833A1 discloses a radio network control node that determines the transmit power of a common or shared downlink transport channel regulates that power based on one or more factors. The downlink transmit power regulation makes common downlink transport channel transmissions more efficient and effective in terms of delivering services to users, maximizing capacity, and reducing unnecessary interference.

US2006/154684 A1 discloses an apparatus and process for allocating carriers in a multi-carrier system. The process comprises determining a location (E, D, C, B, A; Fig. 6) of a subscriber with respect to a base station, selecting carriers from a band of carriers to allocate to the subscriber according to the location of the subscriber with respect to the base station, and allocating selected carriers to the subscriber for the subscriber to transmit using the carriers.

US2001/006888 discloses a multi-carrier transmitter which has combination means for receiving and combining a plurality of carriers including a first modulated carrier for transmission in a first channel and a second modulated carrier for transmission in a second channel, to create a multi-carrier signal, where power control means are arranged to individually vary the power of each of the plurality of carriers before combination.

Prior art document EP 1 530 387 A1 discloses multi-carrier transmitters wherein different carriers are grouped in "high-power", "medium-power" and "low-power" groups of carriers, and wherein subscribers/ UEs are assigned to a different group of carriers according to their location relative to the base station.

### Summary of the Invention

Embodiments of the present invention provide methods, a base station and a base station controller, according to the attached claims, for sharing multi-carrier power to achieve automatic adjustment of the transmit powers of the carriers on a multi-carrier channel.

The scope of the present invention is defined by the appended independent claims. Preferred embodiments of the invention are stipulated in the dependent claims. In the following, parts of the description and drawings referring to embodiments which are not covered by the claims are not presented as embodiments of the invention, but as examples useful for understanding the invention.

In comparison with the prior art, the embodiments of the present invention implements that: The carrier output power is adjusted dynamically without changes in main hardware such as the PA by scheduling by the base station controller according to the power strength of a valid signal received by the user equipment from the base station. The carrier output power is thus increased to the effect of coverage enhancement and cost reduction.

### Brief Description of the Drawings

FIG. 1 is a schematic drawing of PBT used in a dual-transceiver base station in a prior art;
FIG. 2 is a flowchart of a method for sharing multi-carrier power in an embodiment of the present invention; and
FIG. 3 is a schematic drawing of the transmission link of a multi-carrier base station in an embodiment of the present invention.

### Detailed Description of the Embodiments

During the implementation of the present invention, the inventor discovers at least the following weakness in the prior art:
A dual-transceiver base station in the prior art adopts the PBT but compromises the system capacity and two carriers can work as only one carrier. Further, to enable timeslot based power sharing, it requires a high hardware response speed that two transmit powers are output after being combined.

In the prior art, a multi-carrier transmitter uses multiple carriers to carry multiple valid signals respectively on one channel. As one channel supports more carriers, the peak-to-average ratio of the output signal will be higher and power back off will be greater. If a PA with a higher output power is not adopted, the output power per carrier will drop, thus impacting coverage.

According to the claimed invention a method for sharing multi-carrier power is provided.

As shown in FIG. 2, the method includes the following steps:
Step s200: An output power adjustment indication is generated according to the power strength of a valid signal received by the user equipment from the base station. For example, a network device, such as a base station controller, dynamically adjusts the output power per timeslot per carrier of the base station and sends a output power adjustment indication according to location situation of subscribers (that is, user equipment) in the cell, such as the distance between the user equipment and the base station, the coupling loss between the user equipment and the base station, or power strength of a valid signal received by the user equipment from the base station.
Step s210: The base station controller sends the base station the output power adjustment indication to instruct the base station to share and distribute the multi-carrier output power according to the output power adjustment indication. Specifically, the base station controller sends the base station the output power adjustment indication to instruct the base station to: adjust carrier output power consumed by a user equipment that receives a low-strength valid signal from the base station to make the carrier output power be above the average output power per carrier; adjust carrier output power consumed by a user equipment that receives a high-strength valid signal (that is, above a preset threshold) from the base station to make the carrier output power be below the average output power per carrier.

The total power of carriers outputted by the base station is not higher than the product of the number of multi-carrier outputs n and the average output power per carrier; the average output power per carrier equals the maximum PA output power divided by n. The maximum PA output power may fluctuate depending on the PA. The fluctuation is described as the output power capability range of the PA.

In the above embodiment, with respect to a GSM base station, mobile subscribers of a cell are located randomly in the coverage of the cell. Some subscribers are far from the base station and some are near. The valid signals they receive vary in signal strength. The output powers of the base station at the frequencies occupied by the subscribers are also different. The base station may adjust the carrier output power dynamically according to the output power adjustment indication from the base station controller. Thus, power sharing is realized and the saved power can be used by other carriers so as to reduce network interference and power consumption.

In addition, the power distribution and combination in the embodiment are implemented by software or logic in the digital domain. The response speed is not impacted by hardware and can reach the timeslot level.

A system for sharing multi-carrier power provided in an embodiment of the present invention includes: a base station controller, adapted to generate an output power adjustment indication according to the power strength of a valid signal received by the user equipment from the base station and send the base station the output power adjustment indication to instruct the base station to share and distribute multi-carrier output power; and the base station, adapted to adjust the carrier output power dynamically according to the output power adjustment indication, specifically, adjust the carrier output power consumed by a user equipment that receives a low-strength valid signal from the base station to make the carrier output power be above the average output power per carrier; adjust the carrier output power consumed by a user equipment that receives a high-strength valid signal from the base station to make the carrier output power be below the average output power per carrier.

The base station controller includes: a distributing module, adapted to generate the output power adjustment indication according to the power strength of a valid signal received by the user equipment from the base station; and a power adjustment indication sending module, adapted to send the base station the output power adjustment indication to instruct the base station to share and distribute the multi-carrier output power.

The base station includes: an indication obtaining module, adapted to obtain the output power adjustment indication from the base station controller; a power adjusting module, adapted to adjust the carrier output power dynamically according to the output power adjustment indication, specifically, adjust the carrier output power consumed by a user equipment that receives a low-strength valid signal from the base station to make the carrier output power be above the average output power per carrier; adjust the carrier output power consumed by a user equipment that receives a high-strength valid signal from the base station to make the carrier output power be below the average output power per carrier.

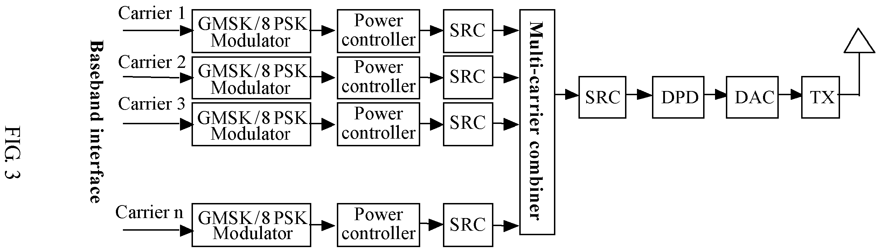

The above method is described with respect to an exemplary GSM multi-carrier transceiver. FIG. 3 is a schematic drawing of the transmission link of the GSM multi-carrier transceiver in a base station. Carrier 1, carrier 2, ..., and carrier n are separate in the baseband. Through the modulator, power controller, and sample rate converter (SRC), transmit signals are synthesized in the multi-carrier combiner and the combined signal goes through the SRC and digital predistortion (DPD) and is converted to an analog signal by the digital to analog converter (DAC). The analog signal is frequency-converted and amplified by the transmitter (TX) and finally transmitted by the antenna. If power sharing is not adopted, the power per carrier is even. If the maximum output power per carrier is P_{average}, the maximum total output power is n × P_{average}. To achieve a higher output power and wider coverage, the output power capability of the PA must be improved and the costs of the PA are higher. Moreover, the power consumption is increased, which increases the operation costs of the operator and also increases the cost and difficulty of system design. A power sharing solution is provided in an embodiment of the present invention. The solution includes: adjusting the output power per carrier of a GSM multi-carrier transceiver dynamically according to the power strength of a valid signal received by a user equipment from a base station under control of the scheduling of the base station controller, without changing the main hardware such as the PA. Thereby, the solution achieves power sharing and enhances the coverage. The carrier output power adjustment of the multi-carrier transceiver is carried out according to the instruction of the base station controller and implemented in digital domain before combination in the multi-carrier combiner. The entire process is as follows:
In the embodiment of the present invention, set the output power of a broadcast control channel (BCCH) is P_{B} (P_{B}≥P_{average}) according to the uplink-downlink balance and system coverage requirement. The base station controller adjusts the output power dynamically according to location situation of a subscriber in the cell of a base station corresponding to the base station controller. For example, with regard to a subscriber located at the cell edge, if the occupied frequency is f, because the coupling loss is relatively great, the power strength of the fᵢ signal received by the subscriber is low and the output power of the multi-carrier transceiver at fᵢ may be high. In this case, the base station controller adjusts the output power to Pᵢ (Pᵢ≥P_{average}, 1≤i≤n) to satisfy the system coverage requirement. There may be more such subscribers and therefore the dynamic PA output power adjustment may be achieved at least at the timeslot level. As for a subscriber relatively near to the base station, the frequency at current timeslot is fⱼ and the power strength of the fⱼ signal received by the subscriber is high. Therefore, the base station controller reduces the output power dynamically to Pⱼ (Pⱼ<P_{average}, 1≤j≤n). There may be more such subscribers and the dynamic PA output power adjustment may be achieved at least at the timeslot level. Through the dynamic adjustment, the sum of the n carrier powers outputted by the base station (P₁ + P₂ + ... + Pᵢ+ ... + Pn) is not higher than n × P_{average} or is within the output power capability range of the PA.

In the embodiment of the present invention, the carrier output power is adjusted dynamically under control of the scheduling of the base station controller according to the power strength of a valid signal received by the user equipment from the base station, without changes in main hardware such as the PA. The carrier output power is thus increased, realizing the effect of coverage enhancement and cost reduction.

In addition, the power distribution and combination in the embodiment are implemented by software or logic in the digital domain. The response speed is not impacted by hardware and can reach the timeslot level.

Through the descriptions of the preceding embodiments, those skilled in the art may understand that the present invention may be implemented by hardware only or by software and a necessary universal hardware platform. Based on such understandings, the technical solution of the present invention may be embodied in the form of a software product. The software product may be stored in a nonvolatile storage medium, which may be a Compact Disk Read-Only Memory (CD-ROM), a USB disk, or a removable hard disk. The software product includes a number of instructions that enable a computer device (personal computer, server, or network device) to execute the methods provided in the embodiments of the present invention.

The above descriptions are merely exemplary embodiments of the present invention, but not intended to limit the scope of the present invention. The scope of the present invention is defined by the appended independent claims. Preferred embodiments of the invention are stipulated in the dependent claims

## Claims

1. A method for enhancing wireless coverage, comprising:
generating (s200), by a network device, an output power adjustment indication according to power strength of a valid signal received by a user equipment from a base station; and
instructing (s201), by the network device, the base station to share and distribute multi-carrier output power of the base station according to the output power adjustment indication by sending to the base station the output power adjustment indication;
adjusting, by the base station, carrier output power distributed to a first user equipment to make the carrier output power be above an average output power per carrier, wherein the first user equipment is one of said user equipment, and the first user equipment receives from the base station a low-strength valid signal;
adjusting, by the base station, carrier output power distributed to a second user equipment to make the carrier output power be below the average output power per carrier, wherein the second user equipment is one of said user equipment, and the second user equipment receives from the base station a high-strength valid signal that is above a preset threshold;
wherein the average output power per carrier equals a maximum power amplifier output power divided by the number of multi-carrier outputs.

2. The method of claim 1, wherein:
a total power of carriers outputted by the base station is not higher than a product of the number of carrier outputs and an average output power per carrier.

3. The method of any one of claims 1 or 2, wherein the sharing of the multi-carrier output power is achieved at least at a timeslot level.

4. A method for enhancing wireless coverage, comprising:
receiving, by a base station, an output power adjustment indication, wherein the output power adjustment indication is generated according to power strength of a valid signal received by a user equipment from the base station; and
sharing, by the base station, multi-carrier output power of the base station according to the output power adjustment indication;
wherein the sharing the multi-carrier output power of the base station comprises:
adjusting, by the base station, carrier output power distributed to a first user equipment to make the carrier output power be above an average output power per carrier, wherein the first user equipment is one of said user equipment, and the first user equipment receives from the base station a low-strength valid signal;
adjusting, by the base station, carrier output power distributed to a second user equipment to make the carrier output power be below the average output power per carrier, wherein the second user equipment is one of said user equipment, and the second user equipment receives from the base station a high-strength valid signal that is above a
preset threshold;
wherein the average output power per carrier equals a maximum power amplifier output power divided by the number of multi-carrier outputs.

5. The method of claim 4, wherein:
a total power of carriers outputted by the base station is not higher than a product of the number of carrier outputs and an average output power per carrier.

6. The method of any one of claims 4 or 5, wherein the sharing of the multi-carrier output power is achieved at least at a timeslot level.

7. Abase station, comprising:
an indication obtaining module, configured to obtain an output power adjustment indication, wherein the output power adjustment indication is generated according to power strength of a valid signal received by a user equipment from the base station; and a power adjusting module, configured to adjust carrier output power for sharing multi-carrier output power of the base station according to the power adjustment indication;
wherein the power adjusting module is configured to adjust carrier output power distributed to a first user equipment to make the carrier output power be above an average output power per carrier, wherein the first user equipment is one of said user equipment, and the first user equipment receives from the base station a low-strength valid signal;
the power adjusting module is configured to adjust carrier output power distributed to a second user equipment to make the carrier output power be below the average output power per carrier, wherein the second user equipment is one of said user equipment, and the second user equipment receives from the base station a high-strength valid signal that is above a preset threshold;
wherein the average output power per carrier equals a maximum power amplifier output power divided by the number of multi-carrier outputs.

8. The base station of claim 7, wherein:
a total power of carriers outputted by the base station is not higher than a product of the number of carrier outputs and an average output power per carrier.

9. The base station of any one of claims 7 or 8, wherein the adjusting carrier output power is achieved at least at a timeslot level.

10. Abase station controller, comprising:
a distributing unit, configured to generate an output power adjustment indication according to power strength of a valid signal received by a user equipment from a base station; and
a power adjustment indication sending module, configured to send the output power adjustment indication to the base station, wherein the output power adjustment indication is used to instruct the base station to share and distribute the multi-carrier output power of the base station;
wherein the output power adjustment indication is used to instruct the base station to adjust carrier output power distributed to a first user equipment to make the carrier output power be above an average output power per carrier, wherein the first user equipment is one of said user equipment, and the first user equipment receives from the base station a low-strength valid signal;
the output power adjustment indication is used to instruct the base station to adjust carrier output power distributed to a second user equipment to make the carrier output power be below the average output power per carrier, wherein the second user equipment is one of said user equipment, and the second user equipment receives from the base station a high-strength valid signal that is above a preset threshold;
wherein the average output power per carrier equals a maximum power amplifier output power divided by the number of multi-carrier outputs.

11. The base station controller of claim 10, wherein:
a total power of carriers outputted by the base station is not higher than a product of the number of carrier outputs and an average output power per carrier.

## Patentansprüche

1. Verfahren zur Verbesserung der drahtlosen Abdeckung, umfassend:
Erzeugen (s200) einer Ausgangsleistungs-Einstellangabe durch eine Netzvorrichtung gemäß einer Leistungsstärke eines gültigen Signals, das durch ein Benutzergerät von einer Basisstation empfangen wird; und
Anweisen (s201) der Basisstation durch die Netzvorrichtung, Mehrträger-Ausgangsleistung der Basisstation gemäß der Ausgangsleistungs-Einstellangabe durch Senden der Ausgangsleistungs-Einstellangabe zur Basisstation zu teilen und zu verteilen; Einstellen von Trägerausgangsleistung, die an ein erstes Benutzergerät verteilt wird, durch die Basisstation, damit die Trägerausgangsleistung über einer mittleren Ausgangsleistung pro Träger liegt, wobei das erste Benutzergerät eines der Benutzergeräte ist und das erste Benutzergerät von der Basisstation ein gültiges Signal niedriger Stärke empfängt;
Einstellen von Trägerausgangsleistung, die an ein zweites Benutzergerät verteilt wird, durch die Basisstation, damit die Trägerausgangsleistung unter der mittleren Ausgangsleistung pro Träger liegt, wobei das zweite Benutzergerät eines der Benutzergeräte ist und das zweite Benutzergerät von der Basisstation ein gültiges Signal hoher Stärke empfängt, das über einer voreingestellten Schwelle liegt;
wobei die mittlere Ausgangsleistung pro Träger gleich einer maximalen Leistungsverstärker-Ausgangsleistung, dividiert durch die Anzahl der Mehrträgerausgänge, ist.

2. Verfahren nach Anspruch 1, wobei
eine Gesamtleistung von durch die Basisstation ausgegebenen Trägern nicht höher als ein Produkt der Anzahl der Trägerausgänge und einer mittleren Ausgangsleistung pro Träger ist.

3. Verfahren nach einem der Ansprüche 1 oder 2, wobei das Teilen der Mehrträger-Ausgangsleistung mindestens auf Zeitschlitzebene erzielt wird.

4. Verfahren zum Verbessern der drahtlosen Abdeckung, umfassend:
Empfangen einer Ausgangsleistungs-Einstellungsangabe durch eine Basisstation, wobei die Ausgangsleistungs-Einstellungsangabe gemäß Leistungsstärke eines gültigen Signals erzeugt wird, das durch ein Benutzergerät von der Basisstation empfangen wird; und
Teilen von Mehrträger-Ausgangsleistung der Basisstation durch die Basisstation gemäß der Ausgangsleistungs-Einstellungsangabe;
wobei das Teilen der Mehrträger-Ausgangsleistung der Basisstation Folgendes umfasst:
Einstellen von Trägerausgangsleistung, die an ein erstes Benutzergerät verteilt wird, durch die Basisstation, damit die Trägerausgangsleistung über einer mittleren Ausgangsleistung pro Träger liegt, wobei das erste Benutzergerät eines der Benutzergeräte ist und das erste Benutzergerät von der Basisstation ein gültiges Signal niedriger Stärke empfängt;
Einstellen von Trägerausgangsleistung, die an ein zweites Benutzergerät verteilt wird, durch die Basisstation, damit die Trägerausgangsleistung unter der mittleren Ausgangsleistung pro Träger liegt, wobei das zweite Benutzergerät eines der Benutzergeräte ist und das zweite Benutzergerät von der Basisstation ein gültiges Signal hoher Stärke empfängt, das über einer voreingestellten Schwelle liegt;
wobei die mittlere Ausgangsleistung pro Träger gleich einer maximalen Leistungsverstärker-Ausgangsleistung, dividiert durch die Anzahl der Mehrträgerausgänge, ist.

5. Verfahren nach Anspruch 4, wobei
eine Gesamtleistung von durch die Basisstation ausgegebenen Trägern nicht höher als ein Produkt der Anzahl der Trägerausgänge und einer mittleren Ausgangsleistung pro Träger ist.

6. Verfahren nach einem der Ansprüche 4 oder 5, wobei das Teilen der Mehrträger-Ausgangsleistung mindestens auf Zeitschlitzebene erzielt wird.

7. Basisstation, umfassend:
ein Angabe-Erhaltemodul, ausgelegt zum Erhalten einer Ausgangsleistungs-Einstellungsangabe, wobei die Ausgangsleistungs-Einstellangabe gemäß Leistungsstärke eines gültigen Signals erzeugt wird, das durch ein Benutzergerät von der Basisstation empfangen wird; und ein Leistungseinstellmodul, ausgelegt zum Einstellen von Trägerausgangsleistung zum Teilen von Mehrträger-Ausgangsleistung der Basisstation gemäß der Leistungseinstellungsangabe;
wobei das Leistungseinstellmodul ausgelegt ist zum Einstellen von Trägerausgangsleistung, die an ein erstes Benutzergerät verteilt wird, damit die Trägerausgangsleistung über einer mittleren Ausgangsleistung pro Träger liegt, wobei das erste Benutzergerät eines der Benutzergeräte ist und das erste Benutzergerät von der Basisstation ein gültiges Signal niedriger Stärke empfängt;
das Leistungseinstellmodul ausgelegt ist zum Einstellen von Trägerausgangsleistung, die an ein zweites Benutzergerät verteilt wird, damit die Trägerausgangsleistung unter der mittleren Ausgangsleistung pro Träger liegt, wobei das zweite Benutzergerät eines der Benutzergeräte ist und das zweite Benutzergerät von der Basisstation ein gültiges Signal hoher Stärke empfängt, das über einer voreingestellten Schwelle liegt;
wobei die mittlere Ausgangsleistung pro Träger gleich einer maximalen Leistungsverstärker-Ausgangsleistung, dividiert durch die Anzahl der Mehrträgerausgänge, ist.

8. Basisstation nach Anspruch 7, wobei
eine Gesamtleistung von durch die Basisstation ausgegebenen Trägern nicht höher als ein Produkt der Anzahl der Trägerausgänge und einer mittleren Ausgangsleistung pro Träger ist.

9. Basisstation nach einem der Ansprüche 7 oder 8, wobei das Einstellen der Trägerausgangsleistung mindestens auf Zeitschlitzebene erzielt wird.

10. Basisstationssteuerung, umfassend:
eine Verteilungseinheit, ausgelegt zum Erzeugen einer Ausgangsleistungs-Einstellangabe gemäß Leistungsstärke eines gültigen Signals, das durch ein Benutzergerät von einer Basisstation empfangen wird; und
ein Leistungseinstellungs-Angabesendemodul, ausgelegt zum Senden der Ausgangsleistungs-Einstellangabe zur Basisstation, wobei die Ausgangsleistungs-Einstellangabe verwendet wird, um die Basisstation anzuweisen, die Mehrträger-Ausgangsleistung der Basisstation zu teilen und zu verteilen;
wobei die Ausgangsleistungs-Einstellangabe verwendet wird, um die Basisstation anzuweisen, Trägerausgangsleistung, die an ein erstes Benutzergerät verteilt wird, einzustellen, damit die Trägerausgangsleistung über einer mittleren Ausgangsleistung pro Träger liegt, wobei das erste Benutzergerät eines der Benutzergeräte ist und das erste Benutzergerät von der Basisstation ein gültiges Signal niedriger Stärke empfängt;
die Ausgangsleistungs-Einstellangabe verwendet wird, um die Basisstation anzuweisen, Trägerausgangsleistung, die an ein zweites Benutzergerät verteilt wird, einzustellen, damit die Trägerausgangsleistung unter der mittleren Ausgangsleistung pro Träger liegt, wobei das zweite Benutzergerät eines der Benutzergeräte ist und das zweite Benutzergerät von der Basisstation ein gültiges Signal hoher Stärke empfängt, das über einer voreingestellten Schwelle liegt;
wobei die mittlere Ausgangsleistung pro Träger gleich einer maximalen Leistungsverstärker-Ausgangsleistung, dividiert durch die Anzahl der Mehrträgerausgänge, ist.

11. Basisstationssteuerung nach Anspruch 10, wobei
eine Gesamtleistung von durch die Basisstation ausgegebenen Trägern nicht höher als ein Produkt der Anzahl der Trägerausgänge und einer mittleren Ausgangsleistung pro Träger ist.

## Revendications

1. Procédé de rehaussement d'une couverture sans fil, comprenant :
la génération (s200), par un dispositif réseau, d'une indication de réglage de puissance de sortie en fonction d'une force de puissance d'un signal valable reçu par un équipement utilisateur depuis une station de base ; et
le fait d'ordonner (s201), par le dispositif réseau, à la station de base de partager et de distribuer une puissance de sortie multi-porteuse de la station de base en fonction de l'indication de réglage de puissance de sortie en envoyant à la station de base l'indication de réglage de puissance de sortie ;
le réglage, par la station de base, d'une puissance de sortie de porteuse distribuée à un premier équipement utilisateur pour qu'elle soit supérieure à une puissance de sortie moyenne par porteuse, le premier équipement utilisateur étant l'un desdits équipements utilisateurs et le premier équipement utilisateur recevant depuis la station de base un signal valable de faible puissance ;
le réglage, par la station de base, d'une puissance de sortie de porteuse distribuée à un deuxième équipement utilisateur pour qu'elle soit inférieure à la puissance de sortie moyenne par porteuse, le deuxième équipement utilisateur étant l'un desdits équipements utilisateurs, et le deuxième équipement utilisateur recevant depuis la station de base un signal valable de forte puissance supérieur à un seuil prédéfini,
dans lequel la puissance de sortie moyenne par porteuse est égale à une puissance de sortie d'amplificateur de puissance maximale divisée par le nombre de sorties multiporteuses.

2. Procédé selon la revendication 1, dans lequel :
une puissance totale de porteuses produite en sortie par la station de base n'est pas supérieure à un produit du nombre de sorties de porteuses et d'une puissance de sortie moyenne par porteuse.

3. Procédé selon l'une quelconque des revendications 1 et 2, dans lequel le partage de la puissance de sortie multi-porteuse est réalisé au moins à un niveau de tranche de temps.

4. Procédé de rehaussement d'une couverture sans fil, comprenant :
la réception, par une station de base, d'une indication de réglage de puissance de sortie, l'indication de réglage de puissance de sortie étant générée en fonction d'une force de puissance d'un signal valable reçu par un équipement utilisateur depuis la station de base ; et
le partage, par la station de base, de la puissance de sortie multi-porteuse de la station de base en fonction de l'indication de réglage de puissance de sortie ;
dans lequel le partage de la puissance de sortie multi-porteuse de la station de base comprend :
le réglage, par la station de base, d'une puissance de sortie de porteuse distribuée à un premier équipement utilisateur pour qu'elle soit supérieure à une puissance de sortie moyenne par porteuse, le premier équipement utilisateur étant l'un desdits équipements utilisateurs et le premier équipement utilisateur recevant depuis la station de base un signal valable de faible puissance ;
le réglage, par la station de base, d'une puissance de sortie de porteuse distribuée à un deuxième équipement utilisateur pour qu'elle soit inférieure à la puissance de sortie moyenne par porteuse, le deuxième équipement utilisateur étant l'un desdits équipements utilisateurs et le deuxième équipement utilisateur recevant depuis la station de base un signal valable de forte puissance qui est supérieur à un seuil prédéfini ;
dans lequel la puissance de sortie moyenne par porteuse est égale à une puissance de sortie d'amplificateur de puissance maximale divisée par le nombre de sorties multiporteuses.

5. Procédé selon la revendication 4, dans lequel :
une puissance totale de porteuses produite en sortie par la station de base n'est pas supérieure à un produit du nombre de sorties de porteuses et d'une puissance de sortie moyenne par porteuse.

6. Procédé selon l'une quelconque des revendications 4 et 5, dans lequel le partage de la puissance de sortie multi-porteuse est réalisé au moins à un niveau de tranche de temps.

7. Station de base comprenant :
un module d'obtention d'indication, configuré pour obtenir une indication de réglage de puissance de sortie, l'indication de réglage de puissance de sortie étant générée en fonction d'une force de puissance d'un signal valable reçu par un équipement utilisateur depuis la station de base ; et un module de réglage de puissance, configuré pour régler une puissance de sortie de porteuse pour partager une puissance de sortie multi-porteuse de la station de base en fonction de l'indication de réglage de puissance ;
dans laquelle le module de réglage de puissance est configuré pour régler une puissance de sortie de porteuse distribuée à un premier équipement utilisateur afin qu'elle soit supérieure à une puissance de sortie moyenne par porteuse, le premier équipement utilisateur étant l'un desdits équipements utilisateurs et le premier équipement utilisateur recevant depuis la station de base un signal valable de faible puissance ;
le module de réglage de puissance est configuré pour régler une puissance de sortie de porteuse distribuée à un deuxième équipement utilisateur afin qu'elle soit inférieure à la puissance de sortie moyenne par porteuse, le deuxième équipement utilisateur étant l'un desdits équipements utilisateurs et le deuxième équipement utilisateur recevant depuis la station de base un signal valable de forte puissance supérieur à un seuil prédéfini ;
dans laquelle la puissance de sortie moyenne par porteuse est égale à une puissance de sortie d'amplificateur de puissance maximale divisée par le nombre de sorties multiporteuses.

8. Station de base selon la revendication 7, dans laquelle :
une puissance totale de porteuses produite en sortie par la station de base n'est pas supérieure à un produit du nombre de sorties de porteuses et d'une puissance de sortie moyenne par porteuse.

9. Station de base selon l'une quelconque des revendications 7 et 8, dans laquelle le réglage d'une puissance de sortie de porteuse est réalisé au moins à un niveau de tranche de temps.

10. Contrôleur de station de base, comprenant :
une unité de distribution, configurée pour générer une indication de réglage de puissance de sortie en fonction d'une force de puissance d'un signal valable reçu par un équipement utilisateur depuis une station de base ; et
un module d'envoi d'indication de réglage de puissance, configuré pour envoyer l'indication de réglage de puissance de sortie à la station de base, l'indication de réglage de puissance de sortie étant utilisée pour ordonner à la station de base de partager et distribuer la puissance de sortie multi-porteuse de la station de base ;
dans lequel l'indication de réglage de puissance de sortie est utilisée pour ordonner à la station de base de régler une puissance de sortie de porteuse distribuée à un premier équipement utilisateur afin qu'elle soit supérieure à une puissance de sortie moyenne par porteuse, le premier équipement utilisateur étant l'un desdits équipements utilisateurs et le premier équipement utilisateur recevant depuis la station de base un signal valable de faible puissance ;
l'indication de réglage de puissance de sortie est utilisée pour ordonner à la station de base de régler une puissance de sortie de porteuse distribuée à un deuxième équipement utilisateur afin qu'elle soit inférieure à la puissance de sortie moyenne par porteuse, le deuxième équipement utilisateur étant l'un desdits équipements utilisateur, et le deuxième équipement utilisateur recevant depuis la station de base un signal valable de forte puissance supérieur à un seuil prédéfini ;
dans lequel la puissance de sortie moyenne par porteuse est égale à une puissance de sortie d'amplificateur de puissance maximale divisée par le nombre de sorties multiporteuses.

11. Contrôleur de station de base selon la revendication 10, dans lequel :
une puissance totale de porteuses produite en sortie par la station de base n'est pas supérieure à un produit du nombre de sorties de porteuses et d'une puissance de sortie moyenne par porteuse.
